# EUROPÄISCHE PATENTANMELDUNG

(11) **EP 1 864 883 A1**
(43) Veröffentlichungstag der Anmeldung: **12.12.2007**
(21) Anmeldenummer: 07108928.8
(22) Anmeldetag: 25.05.2007
(51) Int. Cl.: B61K 3/02, F16N 7/38

(54) **Vorrichtung und Verfahren zum Ausbringen eines feste Partikel enthaltenden, an Luft trocknenden Schmierstoffs auf eine Schmierstelle**

(30) Priorität: 31.05.2006 DE 102006025776
(71) Anmelder: Rebs Zentralschmiertechnik GmbH, 40885 Ratingen-Lintorf (DE)
(72) Erfinder: Schwarze, Hermann, 42579 Heiligenhaus (DE); Rebs, Harald, 40885 Ratingen (DE)
(74) Vertreter: Cohausz & Florack

(57) **Zusammenfassung**

Eine erfindungsgemäße Vorrichtung zum Ausbringen eines Schmierstoffs ermöglicht die exakt dosierte Ausbringung von Schmierstoffen mit hohem Feststoffanteil, die in ein bei Kontakt mit der Normalatmosphäre trocknendes Medium eingebettet sind, indem sie mit einem Schmierstoffbehälter 2 für den Schmierstoff, mit einer an den Auslass des Schmierstoffbehälters 2 angeschlossenen Schmierstoffpumpe 4, mit einem Druckspeicher 7, der eine Schmierstoffkammer 5, in die die Schmierstoffpumpe 4 in Abhängigkeit von einem Steuersignal Schmierstoff fördert, und eine Einrichtung zur Druckbeaufschlagung des in der Schmierstoffkammer 5 enthaltenen Schmierstoffs umfasst, mit einer Füllstandserfassungseinrichtung 18, die das Füllvolumen der Schmierstoffkammer 5 des Druckspeichers 7 erfasst, und in Abhängigkeit von dem erfassten Füllvolumen der Schmierstoffkammer 5 des Druckspeichers 7 das Steuersignal zum Befüllen der Schmierstoffkammer 5 an die Schmierstoffpumpe 4 abgibt, und mit einer Düse 20,21 ausgestattet ist, die über eine Schmierstoffförderleitung 19 an einen Auslass der Schmierstoffkammer 5 des Druckspeichers 7 angeschlossen ist und zum Ausbringen des Schmierstoffs auf die Schmierstelle vorgesehen ist.

## Beschreibung

Die Erfindung betrifft eine Vorrichtung und ein Verfahren zum Ausbringen eines Schmierstoffs, insbesondere eines feste Partikel enthaltenden, an Luft trocknenden Schmierstoffs, auf eine Schmierstelle, insbesondere auf die Fahrflächen einer Schiene für Schienenfahrzeuge. Unter dem Begriff "Schmierstoff" werden in diesem Zusammenhang alle fließfähigen oder pastösen Stoffe verstanden, die dazu geeignet sind, die Reibung zwischen zwei aneinander und relativ zueinander bewegten Teilen zu beeinflussen. Insbesondere sind darunter solche Flüssigkeiten zusammengefasst, die zur Reibungsmodifizierung der Reibpaarung "Schiene / Schienenrad" auf die Fahrfläche eines Schienenkopfes gegeben werden. Derartige Schmierstoffe werden im Englischen auch als "friction modifier" bezeichnet.

Beim Überfahren von Schienen durch ein Schienenfahrzeug kann es insbesondere im Schwerlastverkehr zu einem erhöhten Verschleiß der Schiene in Folge ungünstiger Bedingungen der Reibpaarung Schienenfahrfläche - Schienenrad kommen. Dieser Verschleiß äußert sich zum einen in einem Materialabtrag. Zum anderen kann es zu einer Riffelbildung auf der Fahrfläche der Schiene kommen, durch die das Abrollverhalten des auf der Fahrfläche jeweils rollenden Schienenrades deutlich beeinträchtigt wird. Darüber hinaus können insbesondere bei Kurvenfahrten aufgrund der dann herrschenden ungünstigen Reibverhältnisse und des Auftretens von Querkräften hochfrequente Schwingungen entstehen, die zu einer erheblichen akustischen Belastung der Umgebung führen können.

Gemindert werden können die voranstehend zusammengefassten Verschleißerscheinungen und Geräuschbelästigungen durch den gezielten Auftrag von Schmierstoff auf die Fahrflächen in den jeweils gefährdeten Bereichen. Zu diesem Zweck können die auf den Schienen fahrenden Schienenfahrzeuge mit einer entsprechenden Dosiereinrichtung ausgestattet sein. Darüber hinaus ist es bekannt, in besonders kritischen Bereichen einer Gleistrasse, beispielsweise im Bereich enger Kurven oder an besonders steilen Steigungen, stationäre Geräte vorzusehen, die bei der Vorbeifahrt eines Zuges jeweils eine Schmierstoffportion auf die Fahrfläche ausbringen.

Langjährige Erfahrungen zeigen, dass bei Verwendung geeigneter Schmierstoffe die Verschleißerscheinungen und die Geräuschemissionen in den gefährdeten Bereichen deutlich gemindert werden können. Dabei hat sich überraschend ergeben, dass der Auftrag des Schmierstoffs die gerade im Schienenverkehr wesentliche Reibpaarung Schienenfahrfläche - Schienenrad des Schienenfahrzeugs bei ausreichend genauer, eng begrenzter Dosierung im Hinblick auf die Übertragung der Antriebs- und Bremskräfte nur unwesentlich beeinflusst.

Als für diese Zwecke besonders gut geeignet haben sich Schmierstoffe bewährt, die einen hohen Feststoffanteil beispielsweise in Form von Graphitpartikeln oder vergleichbar wirkenden Stoffen enthalten. Eine Grundanforderung beim Austrag von Schmierstoffen der voranstehend erläuterten Art besteht allerdings darin, die jeweils ausgebrachte Schmierstoffmenge exakt zu dosieren, um die Belastung der Umwelt durch den Schmierstoff auch im Bereich von Gleisanlagen möglichst gering zu halten.

Eine Möglichkeit, die Schmierstoffe mit hohen Feststoffanteilen mit erhöhter Genauigkeit aufzubringen, besteht dabei darin, die Feststoffpartikel in einen Binder einzubetten und als festen Körper an einem Schienenrad unter einer vorgegebenen Anpresskraft anliegen zu lassen. Die Umfangsfläche des Schienenrades wird auf diese Weise laufend mit dem Schmierstoff benetzt. Eine zu diesem Zweck geeignete Vorrichtung ist in der WO 2006/026859 beschrieben. Nachteilig ist dabei allerdings der relativ hohe Verbrauch an Schmierstoff auch an solchen Stellen, an denen eigentlich keine Schmierung erforderlich ist. Ein weiterer Nachteil dieser Art und Weise der Schmierstoffapplikation ist, dass sich so der Schmierstoff nur auf das jeweilige Schienenrad auftragen lässt, jedoch nicht direkt auf die Schienenfahrfläche appliziert werden kann.

Eine andere Möglichkeit der Ausbringung von Schmierstoffen mit hohem Feststoffanteil ergibt sich, wenn ein Schmierstoff verwendet wird, bei dem die Feststoffpartikel mit einem flüssigen Medium vermengt sind. Ein solcher Schmierstoff ist beispielsweise in der WO 2006/015494 A1 beschrieben. Reibungsmodifizierende Schmierstoffe dieser Art lassen sich bei Bedarf exakt dosiert auf die jeweilige Schmierstelle ausbringen. Praktische Erfahrungen zeigen allerdings, dass die zu diesem Zweck üblicherweise verwendeten Düsen häufig verstopfen, da das zum Einbinden der Feststoffpartikel verwendete Medium in der Regel schnell verdunstet und die zurückbleibenden Feststoffe die jeweilige Düsenöffnungen schnell zusetzen.

Noch kritischer ist die Gefahr der Verstopfung in einem System zur Schmierstoffversorgung, bei dem die Ausbringung und Verteilung des Schmierstoffs mittels eines Gasstroms, insbesondere eines Luftstroms, vorgenommen wird. Solche Systeme ermöglichen zwar grundsätzlich die kontinuierliche Ausbringung von exakt dosierten Schmierstoffmengen. Aufgrund des Kontaktes von Gas und Schmierstoff trocknet der Schmierstoff jedoch in der Regel sehr schnell ein mit der Folge, dass das für den Schmierstoffaustrag benötigte Leitungssystem nach kurzer Einsatzzeit verstopft.

Um dies zu vermeiden, ist in der WO 03/099499 A1 eine Düse vorgeschlagen worden, bei der Schmierstoff und der in diesem Fall für den gezielten Auftrag und die Verteilung des Schmierstoffs verwendete Luftstrom erst unmittelbar nach dem Austritt des Schmierstoffs aus der Düsenöffnung zusammentreffen. Ein in die Düsenöffnung zusätzlich eingesetzter Ventilkörper soll dabei sicherstellen, dass es auch bei ungünstigen Verhältnissen zu keinem Verstopfen der Düsenöffnung kommt. Der Ventilkörper verschließt die Düsenöffnung selbsttätig, wenn der für den Austrag auf den Schmierstoff aufgebrachte Druck unter einen Mindestwert fällt. Zusätzlich kann bei der bekannten Düse ein weiterer Luftkanal vorgesehen werden, über den bei einer Unterbrechung des Schmierstoffaustrags im Bereich der Düsenöffnung zurückbleibende Schmierstoffreste weggeblasen werden können.

Mit der bekannten Düse und den unter Verwendungen einer solchen Düse gebildeten Vorrichtungen lassen sich zwar Schmierstoffe der in Rede stehenden Art relativ betriebssicher ausbringen. In der Praxis eingesetzte Vorrichtungen haben jedoch den Nachteil, dass die von ihnen ausgebrachten Schmierstoffmengen in der Regel zu hoch sind, um den durch die heute geltenden Umweltschutzbestimmungen festgelegten Grenzwerten zu entsprechen.

Ausgehend von dem voranstehend erläuterten Stand der Technik bestand die Aufgabe der Erfindung darin, eine Vorrichtung und ein Verfahren anzugeben, mit denen sich auch Schmierstoffe mit hohem Feststoffanteil, die in ein bei Kontakt mit der Normalatmosphäre trocknendes Medium eingebettet sind, hochgenau und gleichmäßig ausbringen lassen.

Eine diese Aufgabe lösende erfindungsgemäße Vorrichtung zum Ausbringen eines feste Partikel enthaltenden, an Luft trocknenden Schmierstoffs auf eine Schmierstelle, insbesondere auf die Fahrfläche einer Schiene für Schienenfahrzeuge, ist erfindungsgemäß mindestens mit einem Schmierstoffbehälter für den Schmierstoff, mit einer an den Auslass des Schmierstoffbehälters angeschlossenen Schmierstoffpumpe, mit einem Druckspeicher, der eine Schmierstoffkammer, in die die Schmierstoffpumpe in Abhängigkeit von einem Steuersignal Schmierstoff fördert, und eine Einrichtung zur Druckbeaufschlagung des in der Schmierstoffkammer enthaltenen Schmierstoffs umfasst, mit einer Füllstandserfassungseinrichtung, die das Füllvolumen der Schmierstoffkammer des Druckspeichers erfasst und in Abhängigkeit von dem erfassten Füllvolumen das Steuersignal zum Befüllen der Schmierstoffkammer an die Schmierstoffpumpe abgibt, und mit einer Düse ausgestattet, die über eine Schmierstoffförderleitung an einen Auslass der Schmierstoff-Kammer des Druckspeichers angeschlossen ist und zum Ausbringen des Schmierstoffs auf die Schmierstelle vorgesehen ist.

Bei einer erfindungsgemäßen Vorrichtung fördert eine Pumpe den zu verteilenden, reibungsmodifizierenden Schmierstoff zunächst in einen Druckspeicher. In diesem Druckspeicher wird in einer Schmierstoffkammer stets ein gewisses Schmierstoffvolumen bevorratet und mittels einer geeigneten Einrichtung unter einem vorgegebenen Druck gehalten. Sofern die jeweilige Betriebssituation dies erfordert, kann die erfindungsgemäße Vorrichtung so ausgebildet sein, dass der auf den Schmierstoff ausgeübte Druck regelbar ist.

Die Versorgung der Düse, über die der Schmierstoff auf die zu versorgende Schmierstelle aufgebracht wird, erfolgt über das in der Schmierstoffkammer des Druckspeichers enthaltene Schmierstoffvolumen. Sinkt das Füllvolumen des Druckspeichers unter einen Mindestwert, so wird ein Steuersignal an die Schmierstoffpumpe abgegeben, die daraufhin die Schmierstoffkammer des Druckspeichers gegen den an der Schmierstoffkammer anliegenden Druck wieder auffüllt.

Auf diese Weise wird eine kontinuierliche Versorgung der Düse mit einem Schmierstoffstrom gewährleistet, der im Wesentlichen frei von Pulsationen oder sonstigen Volumenstromschwankungen ist. Der Volumendurchsatz an Schmierstoff kann dabei durch den an der Schmierstoffkammer anliegenden Druck und die Auslegung des Versorgungsleitungssystems, insbesondere der darin ggf. enthaltenen Drosseln, gesteuert werden, über das die Düse an die Schmierstoffkammer des Druckspeichers angekoppelt ist. Der Druckspeicher wirkt so nach Art eines Puffers, der einerseits die beim Betrieb der Pumpe auftretenden Druckstöße abfängt und andererseits für die kontinuierliche Ausbringung der jeweils erforderlichen Schmierstoffmenge sorgt. Der auf ein Minimum reduzierte Einfluss der Pumpe auf die Ausbringung ermöglicht es, auch sehr kleine Volumenströme exakt dosiert über eine lange Zeit ungestört auszubringen.

Dementsprechend ist die oben angegebene Aufgabe in Bezug auf ein Verfahren zum Ausbringen eines feste Partikel enthaltenden, an Luft trocknenden Schmierstoffs auf eine Schmierstelle, erfindungsgemäß dadurch gelöst worden, dass bei einem solchen Verfahren der Schmierstoff aus einem Schmierstoffbehälter abhängig von einem Steuersignal in die Schmierstoffkammer eines Druckspeichers gefördert, bis ein Sollfüllvolumen erreicht ist, und dort unter einem vorgegebenen Druck gehalten wird, dass der Schmierstoff aus der Schmierstoffkammer zu einer Düse strömt und dass erneut Schmierstoff in die Schmierstoffkammer gefördert wird, wenn das Füllvolumen der Schmierstoffkammer unter einen Mindestfüllvolumen sinkt.

Mit einer erfindungsgemäßen Vorrichtung und einem erfindungsgemäßen Verfahren ist es somit möglich, Schmierstoffe, die in ein bei Kontakt mit der Normalatmosphäre trocknendes Medium eingebettet sind, hochgenau und gleichmäßig ausbringen lassen. Da sich der Schmierstoff dabei bis zu seinem Austritt aus der Düse dauerhaft in einem geschlossenen System befindet und keinen Kontakt zu Gasen hat, durch die er getrocknet werden könnte, eignen sich eine erfindungsgemäße Vorrichtung und das erfindungsgemäße Verfahren insbesondere zum Ausbringen von Schmierstoffen, die einen hohen Feststoffanteil haben und dazu neigen, bei Kontakt mit der Umgebungsatmosphäre schnell zu trocknen.

Die Anzahl der in einer erfindungsgemäßen Vorrichtung vorgesehenen und über den Druckspeicher versorgten Düsen hängt ab von der Zahl der mit Schmierstoff zu versorgenden Stellen. So ist bei einem Schienenfahrzeug, das auf einem aus zwei Schienen gebildeten Gleis fährt, typischerweise jeder Schiene eine Düse zugeordnet. Erforderlichenfalls können weitere, in geeigneter Weise verteilt angeordnete Düsen vorgesehen sein, wenn der Zug eine besonders große Länge aufweist oder große Schmierstoffmengen gleichzeitig ausgebracht werden sollen.

Gemäß einer vorteilhaften Ausgestaltung der Erfindung ist die Schmierstoffpumpe mittels eines Druckmediums, insbesondere pneumatisch oder hydraulisch, betätigbar. Derartige hydraulisch oder pneumatisch antreibbare Schmierstoffpumpen stehen im Stand der Technik zur Verfügung und haben sich in der Praxis bewährt. Genauso lassen sich bei ausreichender Leistungsfähigkeit jedoch auch elektrisch angetriebene Pumpen in einer erfindungsgemäßen Vorrichtung einsetzen. Da die Pumpe bei einer erfindungsgemäßen Vorrichtung in den Druckspeicher fördert, sind dabei die Ansprüche an die Pulsationsarmut des von der Pumpe ausgebrachten Schmierstoffstroms gering.

Grundsätzlich sind als Einrichtungen für die Druckbeaufschlagung alle Mittel geeignet, die es erlauben, einen einstellbaren Druck auf das in der Schmierstoffkammer des Druckspeichers enthaltene Schmierstoffvolumen auszuüben. Auf einfache Weise verwirklichen lässt sich eine solche Einrichtung dadurch, dass diese Einrichtung durch eine in dem Druckspeicher vorhandene und durch ein Druckmedium, insbesondere pneumatisch oder hydraulisch, druckbeaufschlagbare Druckkammer gebildet ist, die durch eine verschiebbare Wand von der Schmierstoffkammer getrennt ist. Zu diesem Zweck kann der Druckspeicher ein Gehäuse aufweisen, dessen Innenraum durch die verschiebbare Wand in die Schmierstoffkammer und Druckkammer geteilt ist. Anstelle einer verschiebbaren Wand kann auch eine fest montierte Membran zur Trennung von Druck- und Schmierstoffkammer verwendet werden, die aufgrund ihrer Materialeigenschaften geeignet ist, den in der Druckkammer herrschenden Druck auf den in der Schmierstoffkammer enthaltenen Schmierstoff zu übertragen.

Ein wesentlicher Vorteil der Erfindung besteht darin, dass sie es erlaubt, die jeweils ausgebrachte Schmierstoffmenge durch Veränderung des auf den in der Schmierstoffkammer enthaltenen Drucks zu regeln. Zu diesem Zweck istgemäß einer besonders praxisgerechten Ausgestaltung der Erfindung die Einrichtung zur Druckbeaufschlagung des in der Schmierstoffkammer des Druckspeichers enthaltenen Schmierstoffs regelbar ausgebildet und es ist eine Steuer-und Regeleinrichtung vorgesehen, die die Einrichtung zur Druckbeaufschlagung in Abhängigkeit von einer Führungsgröße steuert. Bei dieser Führungsgröße kann es sich beispielsweise um die jeweilige Fahrgeschwindigkeit oder ein anderes Kriterium handeln, das einen eindeutigen Indikator für den jeweiligen Schmierstoffbedarf darstellt.

Die Regelung des im Druckspeicher auf den Schmierstoff jeweils aufgebrachten Drucks kann auf einfache Weise dadurch ermöglicht werden, dass die Druckkammer über ein regelbares Druckventil an eine Druckmediumversorgung angeschlossen ist. Die Verwendung eines regelbaren Druckventils hat dabei insbesondere in Kombination mit einer geeignet ausgebildeten, insbesondere fest eingestellten Drossel, den Vorteil, dass es mit einem solchen Ventil auf besonders einfache Weise möglich ist, den im Druckspeicher enthaltenen Druck zu regeln. Indem der Schmierstoff über eine Drossel zu der Düse geleitet wird, sind die bei der druckabhängigen Regelung des Schmierstoffaustrags zu berücksichtigenden Parameter eindeutig festgelegt.

Eine einfache, robuste und auch unter rauen Betriebsbedingungen betriebssicher arbeitende Variante der voranstehend dargelegten Ausgestaltung der Erfindung ist dadurch gekennzeichnet, dass zur Füllstandsüberwachung der Schmierstoffkammer des Druckspeichers die jeweilige Füllstandserfassungseinrichtung mindestens die Stellung der verschiebbaren Wand, die der maximal gefüllten Schmierstoffkammer entspricht, und die Stellung der verschiebbaren Wand erfasst, die einem minimal zulässigen Füllvolumen der Schmierstoffkammer entspricht. Zu diesem Zweck kann die verschiebbare Wand mit einem Schieber verkoppelt sein, dessen Position die Füllstandseinrichtung erfasst.

Ein Ein- und Ausschalten des von der Düse ausgebrachten Schmierstoffstroms kann auf einfache Weise dadurch ermöglicht werden, dass die Düse über ein Steuerventil an den Auslass der Schmierstoffkammer des Druckspeichers angeschlossen ist.

Die Verteilung des Schmierstoffs mit Hilfe eines Gasstroms, insbesondere eines Luftstroms, kann in der Praxis auf einfache Weise dadurch bewerkstelligt werden, dass die Düse einen Anschluss zum Einleiten eines gasförmigen Druckmediums, insbesondere Luft, aufweist, über den sie an eine Druckmediumversorgung angeschlossen ist. Zu diesem Zweck kann die Düse einen die für die Ausbringung von Schmierstoff vorgesehene Austrittsöffnung umgebenden Ringspalt aufweisen, über den das gasförmige Druckmedium unter Mitnahme von aus der Austrittsöffnung austretendem Schmierstoff ausströmt. Indem nach Beendigung eines Schmiervorgangs der Gasstrom für eine bestimmte Zeitdauer aufrechterhalten wird, kann der Gasstrom dabei dazu genutzt werden, um an der Düse nach der Beendigung eines Schmiervorgangs haften bleibende Schmierstoffreste abzublasen.

Im Fall, dass ein Feststoffe enthaltender Schmierstoff verarbeitet wird, kann auch bei längerer Aufbewahrungsdauer ein Absetzen der Feststoffe im Schmierstoffbehälter dadurch verhindert werden, dass der in dem Schmierstoffbehälter enthaltene Schmierstoff von Zeit zu Zeit mittels einer dafür vorgesehenen Rühreinrichtung umgerührt wird.

Um ein Einfrieren des Schmierstoffs bei niedrigen Temperaturen sicher zu verhindern, kann es darüber hinaus zweckmäßig sein, eine Heizung vorzusehen, die zumindest das im Schmierstoffbehälter bevorratete Schmierstoffvolumen beheizt. So kann es beispielsweise zweckmäßig sein, wenn nicht nur der Schmierstoffbehälter, sondern zumindest auch die hinsichtlich einer Abkühlung kritisch angeordneten Leitungen oder die jeweils vorgesehenen Düsen der erfindungsgemäßen Vorrichtung beheizt werden.

Da sich der von erfindungsgemäßen Vorrichtungen ausgebrachte Schmierstoffstrom auch über eine längere Schmierdauer genau dosieren lässt, ist bei Einsatz einer solchen Vorrichtung der Schmierstoffverbrauch insgesamt auf ein Minimum reduziert. Infolge dessen benötigt eine erfindungsgemäße Vorrichtung nur einen Vorratsbehälter von relativ kleinem Volumen. Darüber hinaus nehmen auch die anderen Bauelemente einer erfindungsgemäßen Vorrichtung nur wenig Platz in Anspruch. Daher eignet sich eine erfindungsgemäße Vorrichtung insbesondere zur Verwendung auf einem Schienenfahrzeug, beispielsweise einem schweren Güterzug, wo es auf einem konventionellen Wagon oder einer konventionellen Zugmaschine montiert werden kann, um im laufenden Betrieb erforderlichenfalls die Oberflächen der jeweils befahrenen Schienen zu schmieren. Auch eignet sich eine erfindungsgemäße Vorrichtung zur Verwendung in Triebzügen, wie U- oder Straßenbahnen.

Nachfolgend wird die Erfindung anhand einer zwei Ausführungsbeispiele darstellenden Zeichnung näher erläutert. Es zeigen jeweils schematisch:
- Fig. 1: eine erste Vorrichtung zum Ausbringen eines feste Partikel enthaltenden, an Luft trocknenden Schmierstoffs auf eine Schmierstelle auf die Fahrfläche einer Schiene für Schienenfahrzeuge;

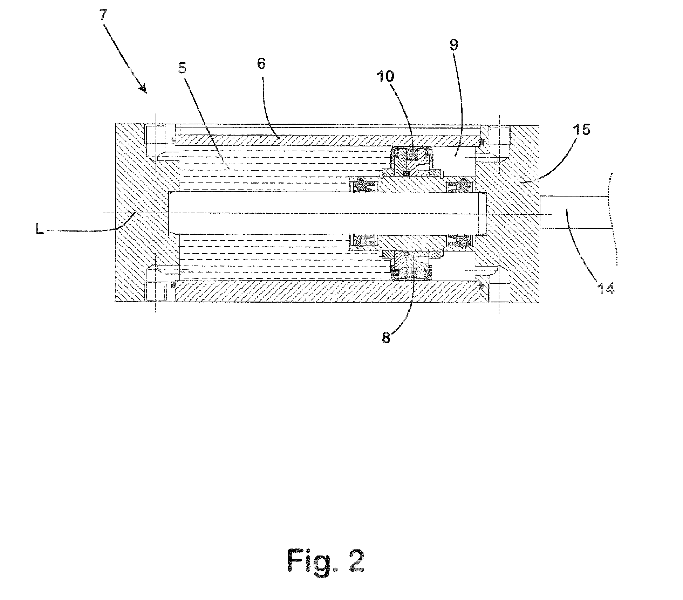

- Fig. 2: einen in der ersten und zweiten Vorrichtung jeweils eingesetzten Druckspeicher in einem Längsschnitt.

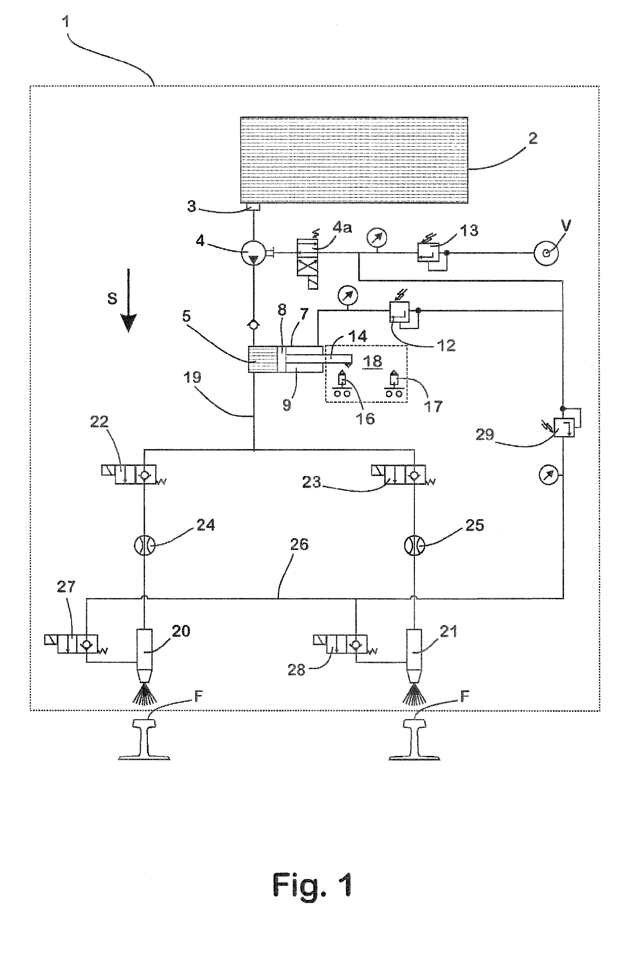

Die in Fig. 1 dargestellte Vorrichtung 1 umfasst einen Schmierstoffbehälter 2, an dessen Auslass 3 über eine Versorgungsleitung eine pneumatisch angetriebene Schmierstoffpumpe 4 angeschlossen ist. Antriebsseitig ist die Schmierstoffpumpe 4 über ein Steuerventil 4a mit einer Druckluftversorgung V verbunden.

In den Schmierstoffbehälter 2 ist ein wassergebundener, einen hohen Anteil an festen Partikeln aufweisender flüssiger Schmierstoff gefüllt, mit dem sich die Reibung zwischen der Schiene und den auf der Schiene abrollenden Schienenrädern modifizieren lässt.

Die Schmierstoffpumpe 4 fördert den aus dem Schmierstoffbehälter 2 zu ihr gelangenden Schmierstoff in eine Schmierstoffkammer 5, die im zylindrischen Gehäuse 6 eines Druckspeichers 7 ausgebildet ist. Der von dem Gehäuse 6 umgebene Innenraum des Druckspeichers 7 ist dazu durch eine in Längsrichtung L des Druckspeichers 7 verschiebbare Wand 8 in die Schmierstoffkammer 5 und eine Druckkammer 9 geteilt. Über eine in die Umfangsfläche der Wand 8 eingelassene Dichtung 10 liegt die Wand 8 dicht an der Innenwand 11 des Gehäuses 6 des Druckspeichers 7 an. Auf diese Weise sind die Schmierstoffkammer 5 und die Druckkammer 9 luftdicht voneinander getrennt, so dass in der Druckkammer 9 enthaltene Luft nicht in die Schmierstoffkammer 5 gelangen kann. Ein Antrocknen von Schmierstoff in der Schmierstoffkammer 5 in Folge eines Kontaktes mit Luft oder einem anderen Umgebungsgas ist somit verhindert. Die Druckkammer 9 selbst ist über ein Regelventil 12 und einen Druckminderer 13 an die Druckluftversorgung V angeschlossen.

Zum Anzeigen des minimal und maximal zulässigen Füllvolumens der Schmierstoffkammer 5 ist ein sich koaxial zur Längsachse L des Druckspeichers 7 erstreckender Schieber 14 mit der verschiebbaren Wand 8 verkoppelt, der über die die Druckkammer 9 begrenzende Stirnwand 15 aus dem Druckspeicher 7 hinausgeführt ist. Die dem minimalen Füllvolumen der Schmierstoffkammer 5 entsprechende, zur Stirnwand 15 nah benachbarte Stellung des freien Endes des Schiebers 14 wird durch einen ersten Sensor 16 erfasst. Genauso wird die dem maximalen Füllvolumen der Schmierstoffkammer 5 entsprechende, zur Stirnwand 15 entfernte Stellung des freien Endes des Schiebers 14 durch einen zweiten Sensor 17 erfasst.

Die Sensoren 16,17 sind Teil einer Füllstandserfassungseinrichtung 18, die das minimale und maximale Füllvolumen der Schmierstoffkammer 5 erfasst. Bei Erreichen des minimalen Füllvolumens gibt der erste Sensor 16 ein Signal ab, auf dass hin die Füllstandserfassungseinrichtung 18 ein Steuersignal zur Betätigung der Schmierstoffpumpe 4 an das Steuerventil 4a abgibt. Dieses gibt daraufhin die Verbindung des Antriebs der Schmierstoffpumpe 4 zur Druckluftversorgung V frei, so dass die Schmierstoffpumpe 4 Schmierstoff aus dem Schmierstoffbehälter 2 in die Schmierstoffkammer 5 des Druckspeichers 7 fördert. Dieser Vorgang wird fortgesetzt, bis das freie Ende des Schiebers 14 den zweiten Sensor 17 erreicht. Dieser gibt dann ein Signal ab, auf das hin die Füllstandserfassungseinrichtung 18 das an dem Steuerventil 4a anliegende Steuersignal unterbricht, so dass die Verbindung des Antriebs der Schmierstoffpumpe 4 zur Druckluftversorgung V unterbrochen wird und kein Schmierstoff mehr in die Schmierstoffkammer 5 gefördert wird.

An den Auslass der Schmierstoffkammer 5 sind über eine Schmierstoffförderleitung 19 zwei Düsen 20,21 angeschlossen. In den jeweils zu den Düsen 20,21 führenden Ästen der Schmierstoffförderleitung 19 sind dabei in Strömungsrichtung S aufeinander folgend jeweils ein Steuerventil 22,23 und eine fest eingestellte Drossel 24,25 mit definierter Drosselwirkung geschaltet. Durch einzelne oder gemeinsame Betätigung der Steuerventile 22,23 kann der Schmierstoffstrom zu der jeweiligen Düse 20,21 abhängig von der jeweiligen Betriebssituation einzeln oder gemeinsam freigegeben oder unterbrochen werden. Die Drosseln 24,25 stellen dabei sicher, dass der Schmierstoff unabhängig vom jeweils aktuellen Füllvolumen der Schmierstoffkammer 5 unter im Wesentlichen konstantem Druck zu der ihnen jeweils zugeordneten Düse 20,21 gelangt.

Bei den Düsen 20,21 handelt es sich um konventionelle Schmierstoffdüsen, bei denen der ausgetragene Schmierstoff von einem Luftstrom erfasst und so hoch beschleunigt wird, dass er sich tropfenweise von der Düse 20,21 ablöst und mit hoher Geschwindigkeit auf die zu schmierende Fläche trifft. Vorliegend handelt es sich dabei beispielsweise um die Fahrfläche F eines Schienenkopfes einer hier weiter nicht gezeigten Schiene, die Teil einer von Schienenfahrzeugen, wie schweren Güterzügen, befahrenen, hier ebenfalls nicht dargestellten Gleisanlage ist. Zu diesem Zweck weisen die Düsen 20,21 jeweils einen Druckluftanschluss auf, der über eine Versorgungsleitung 26, in der wiederum jeweils ein Steuerventil 27,28 geschaltet ist, und einen Druckminderer 29 mit der Druckluftversorgung V verbunden ist.

Der Druck, mit dem das in der Schmierstoffkammer 5 enthaltene Schmierstoffvolumen beaufschlagt wird, und damit der jeweils aus den Düsen 20,21 ausgebrachte Schmierstoff-Volumenstrom werden durch den in der Druckkammer 9 herrschenden Druck in Kombination mit den fest eingestellten Drosseln 24,25 bestimmt. Der in der Druckkammer 9 vorliegende Druck ist wiederum abhängig von der Stellung des Regelventils 12, über das die Druckkammer 9 an die Druckluftversorgung V angeschlossen ist. Die Stellung des Regelventils 12 wird dabei über eine hier weiter nicht dargestellte Steuer- und Regeleinrichtung gesteuert. Diese verstellt das Regelventil 12 in Abhängigkeit von der jeweiligen Fahrgeschwindigkeit des mit der Vorrichtung 1 ausgestatteten Schienenfahrzeugs so, dass in jeder Fahrsituation eine ausreichende Schmierstoffmenge ausgebracht wird.

Zum Ausbringen von Schmierstoff über die Düsen 20,21 werden die Steuerventile 22,23 in der Schmierstoffförderleitung 19 und die Steuerventile 27,28 in der Druckluft-Versorgungsleitung 26 geöffnet, so dass gleichzeitig Schmierstoff und Druckluft zu den Düsen 20,21 strömt und der aus den Düsen 20,21 austretende Schmierstoff auf die zu schmierende Fläche mittels des ebenfalls aus den Düsen 20,21 austretenden Druckluftstroms verteilt wird. Aufgrund des in der Druckkammer 9 aufrechterhaltenen Drucks und der durch die Drosseln 24,25 erzielten Druckbegrenzung wird auf diese Weise ein exakt dosierter und über die gesamte Dauer des Schmiervorgangs im Wesentlichen konstanter Schmierstoffstrom von den Düsen 20,21 ausgebracht.

Zum Beenden des Schmiervorgangs werden zunächst die Steuerventile 22,23 in der Schmierstoffförderleitung 19 geschlossen, so dass kein Schmierstoff mehr zu den Düsen 20,21 gelangt. Die Steuerventile 27,28 werden dagegen noch für eine bestimmte Nachlaufzeit geöffnet gehalten, um mit Hilfe des währenddessen fortgesetzt aus den Düsen 20,21 ausströmenden Druckluftstroms die nach der Beendigung des Schmiervorgangs auf den Düsen 20,21 noch haften bleibenden Schmierstoffreste abzublasen. Sobald die Nachlaufzeit vorüber ist, werden auch die Steuerventile 27,28 geschlossen.

Die erfindungsgemäße Vorrichtung 1 eignet sich insbesondere dazu, feste Partikel enthaltende, wassergebundene Schmierstoffe auszubringen, da der Schmierstoff bis zu seinem Austritt aus den Düsen 20,21 mit keinem seine Trocknung beschleunigenden Medium in Verbindung kommt. Dabei ermöglicht es der in die Vorrichtung 1 einbezogene Druckspeicher 7, auch besonders zähflüssige Schmierstoffe mit schlechten Fließeigenschaften mit auf ein Minimum reduzierten Druckschwankungen in einem konstanten, exakt dosierten Volumenstrom unter Verwendung einer einfachen, robusten und leistungsstarken Pumpe 4 auszubringen.

### BEZUGSZEICHEN

- 1: Vorrichtung zum Ausbringen eines Feststoffpartikel enthaltenden, wassergebundenen Schmierstoffs
- 2: Schmierstoffbehälter
- 3: Auslass
- 4: Schmierstoffpumpe
- 4a: Steuerventil
- 5: Schmierstoffkammer
- 6: Gehäuse des Druckspeichers 7
- 7: Druckspeicher
- 8: verschiebbare Wand
- 9: Druckkammer
- 10: Dichtung
- 11: Innenwand des Gehäuses 6
- 12: Regelventil
- 13: Druckminderer
- 14: Schieber
- 15: die Druckkammer 9 begrenzende Stirnwand
- 16,17: Sensoren
- 18: Füllstandserfassungseinrichtung
- 19: Schmierstoffförderleitung
- 20,21: Düsen
- 22,23: Steuerventile
- 24,25: Drossel
- 26: Druckluft-Versorgungsleitung
- 27,28: Steuerventile
- 29: Druckminderer

- F: Fahrfläche
- L: Längsachse des Druckspeichers 7
- V: Druckluftversorgung
- S: Strömungsrichtung

## Patentansprüche

1. Vorrichtung zum Ausbringen eines Schmierstoffs, auf eine Schmierstelle,
- mit einem Schmierstoffbehälter (2) für den Schmierstoff,
- mit einer an den Auslass des Schmierstoffbehälters (2) angeschlossenen Schmierstoffpumpe (4),
- mit einem Druckspeicher (7), der eine Schmierstoffkammer (5), in die die Schmierstoffpumpe (4) in Abhängigkeit von einem Steuersignal Schmierstoff fördert, und eine Einrichtung zur Druckbeaufschlagung des in der Schmierstoffkammer (5) enthaltenen Schmierstoffs umfasst,
- mit einer Füllstandserfassungseinrichtung (18), die das Füllvolumen der Schmierstoffkammer (5) des Druckspeichers (7) erfasst, und in Abhängigkeit von dem erfassten Füllvolumen der Schmierstoffkammer (5) des Druckspeichers (7) das Steuersignal zum Befüllen der Schmierstoffkammer (5) an die Schmierstoffpumpe (4) abgibt, und
- mit einer Düse (20,21), die über eine Schmierstoffförderleitung (19) an einen Auslass der Schmierstoffkammer (5) des Druckspeichers (7) angeschlossen ist und zum Ausbringen des Schmierstoffs auf die Schmierstelle vorgesehen ist.

2. Vorrichtung nach Anspruch 1, **dadurch gekennzeichnet, dass** die Schmierstoffpumpe (4) elektrisch oder mittels eines Druckmediums betätigbar ist.

3. Vorrichtung nach einem der voranstehenden Ansprüche, **dadurch gekennzeichnet, dass** die Einrichtung zur Druckbeaufschlagung des in der Schmierstoffkammer (5) enthaltenen Schmierstoffs regelbar ist und eine Steuer- und Regeleinrichtung vorgesehen ist, die die Einrichtung zur Druckbeaufschlagung in Abhängigkeit von einer Führungsgröße steuert.

4. Vorrichtung nach einem der voranstehenden Ansprüche, **dadurch gekennzeichnet, dass** die Einrichtung zur Druckbeaufschlagung des in der Schmierstoffkammer (5) des Druckspeichers (7) enthaltenen Schmierstoffs durch eine in dem Druckspeicher (7) vorhandene und durch ein Druckmedium druckbeaufschlagbare Druckkammer (9) gebildet ist, die durch eine verschiebbare Wand (8) von der Schmierstoffkammer (5) getrennt ist.

5. Vorrichtung nach den Ansprüchen 3 und 4, **dadurch gekennzeichnet, dass** die Druckkammer (9) über ein regelbares Ventil (12) an eine Druckmediumversorgung (V) angeschlossen ist.

6. Vorrichtung nach Anspruch 3 oder 4, **dadurch gekennzeichnet, dass** der Druckspeicher (7) ein Gehäuse (6) aufweist, dessen Innenraum durch die verschiebbare Wand (8) in die Schmierstoffkammer (5) und Druckkammer (9) geteilt ist.

7. Vorrichtung nach einem der Ansprüche 4 bis 6, **dadurch gekennzeichnet, dass** die Füllstandserfassungseinrichtung (18) mindestens die Stellung der verschiebbaren Wand (8), die der maximal gefüllten Schmierstoffkammer (5) entspricht, und die Stellung der verschiebbaren Wand (8) erfasst, die einem minimal zulässigen Füllvolumen der Schmierstoffkammer (5) entspricht.

8. Vorrichtung nach Anspruch 7, **dadurch gekennzeichnet, dass** die verschiebbare Wand mit einem Schieber (14) verkoppelt ist und die Füllstandseinrichtung (18) die Position des Schiebers (14) erfasst.

9. Vorrichtung nach einem der voranstehenden Ansprüche, **dadurch gekennzeichnet, dass** die Düse (20,21) über ein Steuerventil (22,23) an den Auslass der Schmierstoffkammer (5) des Druckspeichers (7) angeschlossen ist.

10. Vorrichtung nach einem der voranstehenden Ansprüche, **dadurch gekennzeichnet, dass** die Düse (20,21) über eine Drossel (24,25) an den Auslass der Schmierstoffkammer (5) angeschlossen ist.

11. Vorrichtung nach einem der voranstehenden Ansprüche, **dadurch gekennzeichnet, dass** die Düse (20,21) einen Anschluss zum Einleiten eines gasförmigen Druckmediums aufweist, über den sie an eine Druckmediumversorgung (V) angeschlossen ist.

12. Vorrichtung nach Anspruch 11, **dadurch gekennzeichnet, dass** die Düse (20,21) einen die für die Ausbringung von Schmierstoff vorgesehene Austrittsöffnung umgebenden Ringspalt aufweist, über den das gasförmige Druckmedium unter Mitnahme von aus der Austrittsöffnung austretendem Schmierstoff ausströmt.

13. Vorrichtung nach einem der voranstehenden Ansprüche, **dadurch gekennzeichnet, dass** eine Rühreinrichtung zum Umrühren des in dem Schmierstoffbehälter (2) vorhandenen Schmierstoffs vorgesehen ist.

14. Vorrichtung nach einem der voranstehenden Ansprüche, **dadurch gekennzeichnet, dass** eine Heizung vorgesehen ist, die mindestens den in dem Schmierstoffbehälter (2) vorhandenen Schmierstoff beheizt.

15. Verfahren zum Ausbringen eines feste Partikel enthaltenden, an Luft trocknenden Schmierstoffs auf eine Schmierstelle
- bei dem der Schmierstoff aus einem Schmierstoffbehälter (2) abhängig von einem Steuersignal in die Schmierstoffkammer (5) eines Druckspeichers (7) gefördert, bis ein Sollfüllvolumen erreicht ist, und dort unter einem vorgegebenen Druck gehalten wird,
- bei dem der Schmierstoff aus der Schmierstoffkammer (5) zu einer Düse (20,21) strömt und
- bei dem erneut Schmierstoff in die Schmierstoffkammer (5) gefördert wird, wenn das Füllvolumen der Schmierstoffkammer (5) unter ein Mindestfüllvolumen sinkt.

16. Verfahren nach Anspruch 15, **dadurch gekennzeichnet, dass** der aus der Düse (20,21) ausströmende Schmierstoffstrom mittels eines Gasstroms zu der Schmierstelle befördert wird.

17. Verfahren nach Anspruch 16, **dadurch gekennzeichnet, dass** nach Beendigung eines Schmiervorgangs der Luftstrom für eine bestimmte Zeitdauer aufrechterhalten wird.

18. Verfahren nach einem der Ansprüche 14 bis 17, **dadurch gekennzeichnet, dass** die jeweils ausgebrachte Schmierstoffmenge durch Veränderung des auf den in der Schmierstoffkammer (5) enthaltenen Drucks geregelt wird.

19. Verfahren nach Anspruch 18, **dadurch gekennzeichnet, dass** der Schmierstoff über eine Drossel zu der Düse geleitet wird.

20. Verfahren nach einem der Ansprüche 15 bis 19, **dadurch gekennzeichnet, dass** der Schmierstoff auf die Fahrfläche (F) einer Schiene für Schienenfahrzeuge aufgebracht wird.
